# EUROPÄISCHE PATENTANMELDUNG

(11) **EP 2 589 638 A1**
(43) Veröffentlichungstag der Anmeldung: **08.05.2013**
(21) Anmeldenummer: 12189209.5
(22) Anmeldetag: 19.10.2012
(51) Int. Cl.: C09K 5/06

(54) **Wärmespeichernde Zusammensetzung umfassend einen kationischen Polyelektrolyten und Calciumchloridhexahydrat**

(30) Priorität: 02.11.2011 EP 11187460
(71) Anmelder: BASF SE, 67056 Ludwigshafen (DE)
(72) Erfinder: Rieger, Ralph, 67059 Ludwigshafen (DE); Schröder-Grimonpont, Tina, 76764 Rheinzabern (DE); Klimov, Evgueni, 67071 Ludwigshafen (DE); Herth, Gregor, 83308 Trostberg (DE)

(57) **Zusammenfassung**

Die vorliegende Erfindung betrifft wärmespeichernde Zusammensetzungen, enthaltend
70 bis 99 Gew.-%
Calciumchloridhexahydrat
1 bis 10 Gew.-%
eines oder mehrerer kationischer Polyelektrolyte und
0 bis 20 Gew.-%
eines oder mehrerer weiterer Salze
jeweils bezogen auf die wärmespeichernde Zusammensetzung, ein Verfahren zu ihrer Herstellung, ihre Verwendung als Latentwärmespeichermaterial und dessen Einsatz in wärmespeichernden Baumaterialien sowie als Wärmespeicherelement für Fahrzeuge, Wände von Transportbehältern oder sonstigen Wärmespeicherbehältern.

## Beschreibung

Die vorliegende Erfindung betrifft eine wärmespeichernde Zusammensetzung umfassend einen kationischen Polyelektrolyten und Calciumchloridhexahydrat. Außerdem betrifft die vorliegende Erfindung ein Verfahren zu ihrer Herstellung, ihre Verwendung als wärmespeicherndes Baumaterial sowie als Wärmespeicherelement für Fahrzeuge, Wände von Transportbehältern oder sonstigen Wärmespeicherbehältern.

In den letzten Jahren sind als neue Materialkombination Baustoffe mit Latentwärmespeichermaterialien untersucht worden. Die Funktionsweise der Latentwärmespeichermaterialien oftmals auch als PCM (phase change material) bezeichnet, beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden. Vielfach werden als Latentwärmespeichermaterialien Paraffine eingesetzt, die beim Überschreiten des Phasenüberganges schmelzen. Die flüssige Phase macht in der Regel eine Stabilisierung der Form durch beispielsweise eine Hülle oder Kapselwand erforderlich.

Alternativ zur Mikroverkapselung lehrt die US 6,319,599 die Herstellung eines wärmespeichernden Composites, durch Dispergieren eines Superabsorbers wie Polyacrylamid und eines Latentwärmespeichermaterials in einer Matrix. Der Superabsorber bindet das Wasser des flüssigen Latentwärmespeichermaterials und hält ihn so in der Matrix. Als Latentwärmespeichermaterial werden unter anderen sowohl Alkane wie auch anorganischen Salze wie Calciumchloridhexahydrat genannt.

Anorganische Salzhydrate haben ebenfalls hohe Schmelzenthalpien und damit gute wärmespeichernde Eigenschaften. Problematisch bei den Salzhydraten ist jedoch ihr inkongruentes Schmelzen. So wird nicht ausreichend Kristallwasser freigesetzt um das Salz komplett zu lösen. Es entstehen neben einer an Salz gesättigten wässrigen Lösung noch feste Hydrate mit einem niedrigeren Kristallwassergehalt als die eingesetzten Salzhydrate. Damit kommt es jedoch in der Regel zu einer Entmischung der Salzhydrate, die zur Folge hat, dass die Reaktion nicht vollständig reversibel ist und die Wärmekapazität des Systems mit jedem Zyklus abnimmt.

Um ein solches Entmischen zu verhindern, lehrt die EP 273 779 die Polymerisation von Mischungen aus Acrylsäure und einem Vernetzer in Gegenwart von Natriumsulfatdecahydrat und Wasser. Als Comonomer wird auch Acrylamid eingesetzt. Der sich bildende Superabsorber bindet das freiwerdende Wasser und verhindert so ein Entmischen. Polymere auf Acrylsäurebasis bilden mit Calciumchlorid einen unlöslichen Niederschlag und haben daher keine wärmespeichernde Eigenschaften. Ferner lehrt die US 4,585,843, eine Gelpolymerisation einer Mischung aus quaternisierten Aminoethylacrylaten und Acrylamid in Gegenwart von Natriumsulfatdecahydrat zur Wärmeabfuhr der freiwerdenden Polymerisationswärme. Da eine möglichst hohe Wärmeabfuhr erwünscht ist, werden auf 100 g Polymer 160 g Salz eingesetzt. Die Schrift nennt allgemein die verschiedensten anorganischen Latentwärmespeichermaterialien darunter auch Calciumchloridhexahydrat zur Wärmeabfuhr. Es wurde jedoch gefunden, dass Mischungen von Natriumsulfatdecahydrat mit dem sich bildenden Gel nicht stabil sind.

Der vorliegenden Erfindung lagen daher Zusammensetzungen als Aufgabe zugrunde, in denen es nicht zu einer Entmischung von inkongruent schmelzenden anorganischen Latentwärmespeichersalzen kommt. Ferner sollte die Zusammensetzung eine geringe Unterkühlungsneigung haben.

Dem gemäß wurden wärmespeichernde Zusammensetzungen gefunden, enthaltend

| | |
|---|---|
| 70 bis 99 Gew.-% | Calciumchloridhexahydrat |
| 1 bis 10 Gew.-% | eines oder mehrerer kationischer Polyelektrolyte und |
| 0 bis 20 Gew.-% | eines oder mehrerer weiterer Salze |

jeweils bezogen auf die wärmespeichernde Zusammensetzung.

Die Anmeldung betrifft ferner ein Verfahren zu ihrer Herstellung, ihre Verwendung als Latentwärmespeichermaterial und dessen Einsatz in wärmespeichernden Baumaterialien sowie als Wärmespeicherelement für Fahrzeuge, Wände von Transportbehältern oder sonstigen Wärmespeicherbehältern.

Im Folgenden werden Verbindungen, die sich von Acrylsäure und Methacrylsäure ableiten können, teilweise verkürzt durch Einfügen der Silbe "(meth)" in die von der Acrylsäure abgeleitete Verbindung bezeichnet.

Reines Calciumchloridhexahydrat setzt an seinem Schmelzpunkt von 30°C beim Schmelzen 190 J/g frei. Es ist in unterschiedlichen Reinheitsgraden erhältlich, die je nach den verschiedenen Herstellprozessen und Anwendungen deutlich variieren können. Es ist in unterschiedlichen Reinheitsgraden im Handel erhältlich beispielsweise 90 %, 97 % oder > 99 %. Da mit zunehmender Reinheit eine höhere Schmelzenthalpie einhergeht, sind Salze mit höherer Reinheit bevorzugt. Doch auch bereits mit weniger reinen Substanzen lassen sich gute Ergebnisse erzielen.

Das Calciumchloridhexahydrat wird erfindungsgemäß in einer Menge von 70 bis 99 Gew.-% eingesetzt, vorzugsweise von 85 bis 96 Gew.-% und insbesondere von 90 bis 95 Gew.-% bezogen auf die wärmespeichernde Zusammensetzung.

Der kationische Polyelektrolyt wird erfindungsgemäß in einer Menge von 1 bis 10 Gew.-% eingesetzt, vorzugsweise von 2 bis 8 Gew.-% und insbesondere von 3 bis 7 Gew.-% bezogen auf die wärmespeichernde Zusammensetzung.

Unter einem kationischen Polyelektrolyten sind Copolymere aus mindestens einem nichtionischen wasserlöslichen, gegebenenfalls N-substituierten (Meth)acrylamid und mindestens einem kationischen ethylenisch ungesättigten Monomer, zu verstehen. Die kationischen Polyelektrolyte können linear oder vernetzt sein. Lineare Polyelektrolyte bilden in Wasser homogene, hochviskose Lösungen.

Vernetzte Polyelektrolyte bilden bei Kontakt mit Wasser oder wässrigen Systemen unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber vernetzter wasserunlöslicher Polymere, die als dreidimensionale Netzwerke vorliegen.

Der kationische Polyelektrolyt ist erhältlich durch Polymerisation einer Monomermischung enthaltend

| | |
|---|---|
| a) 5 - 95 Mol-% | bevorzugt 5 bis 70 Mol-%, mindestens eines kationischen ethylenisch ungesättigten Monomeren und |
| b) 5 - 95 Mol-% | bevorzugt 30 - 95 Mol-%, mindestens eines nichtionischen wasserlöslichen, gegebenenfalls N-substituierten (Meth)acrylamids, |

jeweils bezogen auf die Gesamtmenge der Monomere.

Bevorzugte kationische Polyelektrolyte sind erhältlich durch Polymerisation einer Monomermischung bestehend aus

| | |
|---|---|
| a) 5 - 95 Mol-% | bevorzugt 5 bis 70 Mol-%, mindestens eines kationischen ethylenisch ungesättigten Monomeren und |
| b) 5 - 95 Mol-% | bevorzugt 30 - 95 Mol-%, mindestens eines nichtionischen wasserlöslichen, gegebenenfalls N-substituierten (Meth)acrylamids, |
| c) 0 bis 1 Mol-% | eines oder mehrerer ethylenisch ungesättigter Vernetzer |
| d) 0 bis 3 Mol-% | eines oder mehrerer hydrophob modifizierter Monomere |

jeweils bezogen auf die Gesamtmenge Monomere.

Unter kationischen Monomeren a) sind nachfolgend basische Gruppen enthaltende Monomere, die quaternisiert sind oder protoniert bzw. protonierbar sind, zu verstehen. Die nachfolgend aufgeführten Monomere können in neutraler Form, als Salze von Säuren oder in quaternierter Form eingesetzt werden.

Bevorzugte kationische ethylenisch ungesättigte Monomere werden ausgewählt unter Estern von α,β-ethylenisch ungesättigten Mono- und Dicarbonsäuren mit Aminoalkoholen, vorzugsweise C₂-C₁₂-Aminoalkoholen, Amiden von a,β-ethylenisch ungesättigten Mono- und Dicarbonsäuren mit Diaminen, sowie die N- C₁-C₈-monoalkyliert oder N-C₁-C₈-dialkylierte Derivate der Ester bzw. Amide sowie den jeweiligen Quaternisierungsprodukten dieser vorgenannten Monomergruppen.

Als Säurekomponente dieser Ester und Amide eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt.

Bevorzugte Monomere, die kationisierbar sind, durch Protonierung oder Alkylierung, sind beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Darüber hinaus sind als weitere Monomere N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet.

Das jeweilige Gegenion ergibt sich durch das gewählte Neutralisationsmittel bzw. Alkylierungsmittel. Beispielhaft sind Chloride, Sulfate, Methosulfate zu nennen.

Geeignete Quaternierungsmittel sind beispielsweise Dimethylsulfat, Diethylsulfat, Methylchlorid, Ethylchlorid oder Benzylchlorid.

Geeignete nichtionische wasserlösliche, gegebenenfalls N-substituierte (Meth)acrylamide (Monomere b) können unsubstituiert oder N-aliphatisch oder N-aromatisch substituierte (Meth)acrylamide sein. Vorzugsweise werden die nichtionischen wasserlöslichen, gegebenenfalls N-substituierten (Meth)acrylamide eingesetzt ausgewählt unter Methacrylamid, Acrylamid und N-C₁-C₆-alkylsubstituiertem (Meth)acrylamid, N-C₅-C₇-cydoalkylsubstituiertem (Meth)acrylamid und N-benzylsubstituierten (Meth)acrylamid.

Beispielhaft seien Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tert.-Butylacrylamid genannt. Bevorzugt sind Acrylamid, Methylacrylamid, N,N-Dimethylacrylamid, und Methacrylamid, besonders bevorzugt ist Acrylamid.

Unter einem ethylenisch ungesättigten Vernetzer ist ein zwei- oder mehrfach ungesättigtes Monomer (Monomer c) zu verstehen. Mögliche zweifach bzw. mehrfach ungesättigte Monomere sind (Meth)acrylate mit zwei, drei oder vier Acrylatresten wie 1,4-Butandioldi(meth)acrylat, 1,3-Butylenglykoldi(meth)acrylat, Diethylenglykoldi(meth)acrylat, Ethylenglykoldi(meth)acrylat, ethoxyliertes Bisphenol-A-di(meth)acrylat, 1,6-Hexandioldi(meth)acrylat, Neopentylglykoldi(meth)acrylat, Polyethylenglykoldi(meth)acrylat, Triethylenglykoldi(meth)acrylat, Tripropylenglykoldi(meth)acrylat, Tetraethylenglykoldi(meth)acrylat, Dipentaerythritpenta(meth)acrylat, Pentaerythrittetra(meth)acrylat, Pentaerythrittri(meth)acrylat, Trimethylolpropantria(meth)crylat, Cyclopentadiendi(meth)acrylat und/oder Tris(2-hydroxyethyl)isocyanurattri(meth)acrylat, mehr als eine Vinylester-, bzw. Allylestergruppe mit entsprechende Carbonsäure aufweisende Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat; mehr als eine (Meth)acrylamidogruppe aufweisende Monomere wie N,N'-Methylenbis(meth)acrylamid und mehr als eine Maleinimidgruppe aufweisende Monomere wie Hexamethylenbismaleinimid; mehr als eine Vinylethergruppe aufweisende Monomere wie Ethylenglykoldivinylether, Triethylenglykoldivinylether und/oder Cyclohexandioldivinylether. Auch können Allylamino- oder Allylammoniumverbindungen mit mehr als einer Allylgruppe, wie Triallylamin und/oder Tetraallylammoniumsalze eingesetzt werden.

Aus der Gruppe der mehr als eine vinylaromatische Gruppe aufweisenden Monomere sei Divinylbenzol genannt.

Als ethylenisch ungesättigte Vernetzer werden zwei- oder mehrfach ungesättigte Methacrylate und (meth)acrylamidofunktionelle und die allylaminofunktionelle Monomere bevorzugt. Insbesondere werden Vernetzer bevorzugt, die eine besonders gute Hydrolysebeständigkeit aufweisen. Beispiele für besonders bevorzugte Vernetzermonomere sind N,N'-Methylenbisacrylamid, N,N'-Methylenbismethacrylamid, Triallylisocyanurat, Triallylamin und/oder Tetraallylammoniumsalze. Es können jeweils eines oder mehrere der Vernetzermonomere in den Copolymeren vertreten sein. Die vernetzenden Monomere sind von 0,01 bis 1 Mol-%, bevorzugt von 0,05 bis 0,7 Mol-% bezogen auf die Gesamtmenge der Monomere enthalten. Für den Fachmann ist dabei die Menge an Vernetzermonomeren durch Ausführung von Routineversuchen in einfacher Weise zu bestimmen. Die Vernetzung erfolgt im Laufe der Copolymerisationsreaktion, zusätzlich kann auch im Anschluss an die Copolymerisationsreaktion eine Nachvernetzung, wie sie für Superabsorber in "F. Buchholz, A. Graham, Modern Superabsorber Technology, John Wiley & Sons Inc., 1989, 55-67" beschrieben ist, erfolgen.

Unter hydrophob modifizierten Monomere (Monomere d) sind Monomere der allgemeinen Formel I zu verstehen 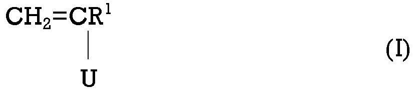 worin
- R¹: Wasserstoff oder Methyl bedeutet
- U: -COO(CₘH₂ₘO)ₙ-R² oder -(CH₂)ₚ-O(C_{q}H_{2q}O)ᵣ-R³ bedeutet,
- m und q: unabhängig voneinander für eine ganze Zahl von 2 bis 4 (bevorzugt 1 oder 2) stehen,
- n und r: unabhängig voneinander für eine ganze Zahl von 1 bis 200 (bevorzugt 1 bis 20) stehen,
- p: für eine ganze Zahl von 0 bis 20 (bevorzugt 1 bis 5) steht,
- R² und R³: unabhängig voneinander für einen Rest 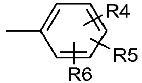 stehen, wobei die Reste R⁴, R⁵ und R⁶ bevorzugt am Aromaten in der paraund ortho Position stehen, und
- R⁴, R⁵ und R⁶: unabhängig voneinander für Wasserstoff, eine C₁-C₆-Alkylgruppe (unverzweigt oder verzweigt, bevorzugt Methyl- oder Ethylgruppe), und/oder eine Arylalkylgruppe mit C₁-C₁₂-Alkyl- (unverzeigt oder verzweigt, bevorzugt Methyl-, Ethyl-) sowie C₆- bis C₁₄-Arylrest (bevorzugt 1-Phenylethyl) stehen.

Bevorzugt sind die Reste R⁴, R⁵ und R⁶ gleich.

Weiterhin sind als hydrophob modifizierte Monomere solche der allgemeinen Formel II geeignet:

H₂C=C(R⁷)-R¹⁰-O-(-CH₂-CH(R⁸)-O-)ₖ-(-CH₂-CH(R⁹)-O-)ᵢ-H (II),

wobei die Einheiten -(-CH₂-CH(R⁸)-O-)ₖ und -(-CH₂-CH(R⁹)-O-)ᵢ in Blockstruktur in der in Formel (II) dargestellten Reihenfolge angeordnet sind und die Reste und Indices die folgende Bedeutung haben:
- k:: eine Zahl von 10 bis 150,
- l:: eine Zahl von 5 bis 25,
- R⁷:: H oder Methyl,
- R⁸:: unabhängig voneinander H, Methyl oder Ethyl, mit der Maßgabe, dass es sich bei mindestens 50 mol % der Reste R⁸ um H handelt,

- R⁹:: unabhängig voneinander ein Kohlenwasserstoffrest mit mindestens 3 Kohlenstoffatomen oder eine Ethergruppe der allgemeinen Formel -CH₂-O-R^{9'}, wobei R^{9'} für einen Kohlenwasserstoffrest mit mindestens 3 Kohlenstoffatomen steht,
- R¹⁰:: eine Einfachbindung oder eine zweiwertige, verknüpfende Gruppe, ausgewählt aus der Gruppe von -(CₙH₂ₙ)-(R^{10a})-, -O-(C_{n'}H_{2n'})(R^{10b})- und -C(O)-O-(C_{n"}H_{2n"})-(R^{10c})- handelt, wobei n, n' und n" jeweils für eine natürliche Zahl von 1 bis 6 steht.

Beispielhaft sind als Monomere d) Tristyrylphenol-polyethylenglykol-1100-methacrylat, Tristyrylphenol-polyethylenglykol-1100-acrylat, Tristyrylphenol-polyethylenglykol-1100-monovinylether, Tristyrylphenol-polyethylenglykol-1100-vinyloxy-butylether und Tristyrylphenol-polyethylenglykol-1100-blockpropylenglykolallylether. Unter Tristryrylphenolverbindungen versteht der Fachmann dabei Tris(1-Phenylethyl)phenolverbindungen.

Weiterhin sind für Monomere der allgemeinen Formel II beispielhaft genannt: Allylpolyethylenglykol-(350 bis 2000), Methylpolyethylenglykol-(350-3000)-monovinylether, Polyethylenglykol-(500-5000)-vinyloxy-butylether, Polyethylenglykol-blockpropylenglykol-(500 bis 5000)-vinyloxy-butylether, Methylpolyethylenglykol-blockpropylenglykolallylether, Methylpolyethylenglykol-750-methycrylat, Polyethylenglykol-500-methycrylat, Methylpolyethylenglykol-2000-monovinylether und/oder Methylpolyethylenglykol-blockpropylenglykolallylether.

Die kationischen Polyelektrolyte enthalten im Allgemeinen mindestens 5 Mol-%, in bevorzugter Form mindestens 7 Mol-% sowie im Allgemeinen höchstens 95 Mol-%, vorzugsweise höchstens 70 Mol-% und in besonders bevorzugter Form höchstens 50 Mol-% mindestens eines kationischen ethylenisch ungesättigten Monomeren einpolymerisiert, bezogen auf die Gesamtmenge der Monomere.

Erfindungsgemäß enthalten die kationischen Polyelektrolyte im Allgemeinen mindestens 5 Mol-%, bevorzugt mindestens 30 Mol-%, vorzugsweise mindestens 50 Mol-% sowie im Allgemeinen höchstens 95 Mol-%, vorzugsweise höchstens 93 Mol-% Mol-% eines oder mehrerer nichtionische wasserlösliche ethylenisch ungesättigten Monomer einpolymerisiert, bezogen auf die Gesamtmenge der Monomere.

Daneben können die kationischen Polyelektrolyte bis zu 1 Mol.-%, bevorzugt bis zu 0,8 Mol-%, insbesondere bis zu 0,5 Mol-%, besonders bevorzugt bis 0,4 Mol-% eines oder mehrerer Vernetzer, einpolymerisiert enthalten, bezogen auf die Gesamtmenge der Monomere. Sofern sie einen oder mehrere Vernetzer einpolymerisiert enthalten, beträgt der Anteil bevorzugt mindestens 0,01 Mol-% bezogen auf die Gesamtmenge der Monomere.

Daneben können die kationischen Polyelektrolyte bis zu 3 Mol-%, bevorzugt bis zu 2 Mol-%, insbesondere bis zu 1,5 Mol-%, besonders bevorzugt bis zu 0,4 Mol-% eines oder mehrerer einfach ethylenisch ungesättigter hydrophober Monomere, die von den Monomeren a) verschieden sind, einpolymerisiert enthalten, bezogen auf die Gesamtmenge der Monomere. Sofern sie einen oder mehrere einfach ethylenisch ungesättigter hydrophober Monomere einpolymerisiert enthalten, beträgt der Anteil bevorzugt mindestens 0,01 Mol-% bezogen auf die Gesamtmenge der Monomere.

Gemäß einer bevorzugten Ausführungsform werden kationische Polyelektrolyte bevorzugt, die vernetzt sind. Insbesondere werden kationische Polyelektrolyte erhältlich durch Polymerisation einer Monomermischung enthaltend
- a) 5 bis 70 Mol.-%: mindestens eines kationischen ethylenisch ungesättigten Monomeren und
- b) 30 bis 95 Mol-%: mindestens eines nichtionischen wasserlöslichen, gegebenenfalls N-substituierten (Meth)acrylamids,
- c) 0,01 bis 1,0 Mol-%: eines oder mehrerer Vernetzer
jeweils bezogen auf die Gesamtmenge der Monomere.

Gemäß einer weiteren bevorzugten Ausführungsform werden kationische Polyelektrolyte bevorzugt, die vernetzt oder unvernetzt sind und ein hydrophob modifiziertes Monomer in einpolymerisierter Form enthalten. Insbesondere werden kationische Polyelektrolyte erhältlich durch Polymerisation einer Monomermischung enthaltend
- a) 5 bis 70 Mol-%: mindestens eines kationischen ethylenisch ungesättigten Monomeren und
- b) 30 bis 95 Mol-%: mindestens eines nichtionischen wasserlöslichen, gegebenenfalls N-substituierten (Meth)acrylamids,
- d) 0,001 bis 1,0 Mol-%: eines oder mehrerer hydrophob modifizierter Monomere
jeweils bezogen auf die Gesamtmenge der Monomere.

Die Herstellung der kationischen Polyelektrolyte erfolgt in an sich bekannter Weise durch durch radikalische Polymerisation der Monomere. Die Copolymerisation der Monomere erfolgt durch radikalische Substanz-, Lösungs-, Gel, Emulsions-, Dispersions- oder Suspensionspolymerisation. Verfahren zur Herstellung von kationischen, hydrophob modifizierten Polyelektrolyten sind bekannt und beispielsweise in der DE 10 2006050761 beschrieben, auf die ausdrücklich Bezug genommen wird. Die hierin gegebene Lehre lässt sich zur Herstellung der kationischen Polyelektrolyte anwenden.

Da es sich bei den erfindungsgemäßen Produkten um hydrophile, in Wasser quellbare Copolymere handelt, ist die Polymerisation in wässriger Phase, die Polymerisation in umgekehrter Emulsion, bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln.

Die Copolymerisation des kationischen Polyelektrolyten kann in einer besonders bevorzugten Ausführungsform als adiabatische Polymerisation durchgeführt werden.

Die Monomere werden in 20 bis 80, vorzugsweise 20 bis 50, insbesondere 30 bis 45 gew.-%iger wässriger Lösung in Gegenwart von Polymerisationsinitiatoren miteinander (co)polymerisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxinitiatoren sowie Photoinitiatoren. Derartige Polymerisationsinitiatoren sowie die bevorzugten Einsatzmengen sind allgemein bekannt.

Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Bevorzugt werden Redoxinitiatoren enthaltend eine oxidierende Komponente beispielsweise eine Perverbindung und eine reduzierende Komponente wie Ascorbinsäure. Bevorzugt wird ein Redoxinitiator bestehend aus Wasserstoffperoxid, Natriumperoxodisulfat und Ascorbinsäure eingesetzt. Der Gewichtsanteil der oxidierenden und der reduzierenden Komponente im Falle der Redox-Initiatorsysteme liegt jeweils im Bereich von 0,00005 bis 0,5 Gew.-%, vorzugsweise jeweils zwischen 0,001 und 0,1 Gew.-% bezogen auf die Gesamtmenge der Monomere.

Im Falle einer Photopolymerisation wird diese mit UV-Licht gestartet, welches den Zerfall eines Photoinitiators bewirkt. Als Photoinitiator können zum Beispiel Benzoin- und Benzoinderivate, wie Benzoinether, Benzil und seine Derivate, wie Benzilketale, Aryldiazoniumsalze, Azoinitiatoren wie z.B. 2,2'-Azobis(isobutyronitril), 2,2'-Azobis(2-amidinopropan)-hydrochlorid und/oder Acetophenonderivate verwendet werden. Für Photoinitiatoren liegt die Einsatzmenge im Bereich von 0,001 bis 0,1 Gew.-%, bevorzugt 0,002 bis 0,05 Gew.-% bezogen auf die Gesamtmenge der Monomere.

Ferner ist eine Kombination beider Startvarianten, also der Einsatz von Redoxinitiatoren sowie Photoinitiatoren möglich.

Die wässrige Monomerlösung kann den Initiator gelöst oder dispergiert enthalten. Die Initiatoren können dem Polymerisationsreaktor jedoch auch getrennt von der Monomerlösung zugeführt werden. Die Auswahl der Polymerisationsbedingungen, insbesondere der Initiatormengen erfolgt mit dem Ziel, möglichst langkettige Polymere zu erzeugen. Aufgrund der Unlöslichkeit der vernetzten Copolymere und der Länge der Polymerketten sind die Molekulargewichte einer Messung allerdings nur sehr schwer zugänglich.

Die Polymerisation wird in wässriger Lösung, bevorzugt in konzentrierter wässriger Lösung diskontinuierlich in einem Polymerisationsgefäß (Batchverfahren) oder kontinuierlich nach der in der US-A-485761 0 beschriebenen "endlosen Band" Methode durchgeführt. Eine weitere Möglichkeit ist die Polymerisation in einem kontinuierlich oder diskontinuierlich betriebenen Knetreaktor. Der Prozess wird bei einer Temperatur zwischen -20 und 20 °C, bevorzugt zwischen -10 und 10 °C gestartet und bei Atmosphärendruck ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen.

In einer weiteren bevorzugten Ausführungsform erfolgt die Copolymerisation als inverse Suspensionspolymerisation der wässrigen Monomerphase in einem organischen Lösemittel, wie in der DE102007027470 beschrieben, auf deren Offenbarung ausdrücklich Bezug genommen wird.

Weiterhin können der erfindungsgemäßen wärmespeichernden Zusammensetzung weitere Salze zugesetzt werden. Die erfindungsgemäß geeigneten Salze beeinflussen die Temperatur des Phasenüberganges.

Der Schmelzpunkt des reinen Calciumchloridhexahydrates liegt bei 30 °C, was nicht unbedingt der gewünschten Schalttemperatur in der Anwendung entsprechen muss. Daher können erfindungsgemäß bis zu 20 Gew.-% eines anderen, von Calciumchloridhexahydrat verschiedenen, organischen oder anorganischen Salzes zugesetzt werden, um den Schmelzpunkt der wärmespeichernden Zusammensetzung zu erniedrigen. Bevorzugt wird das Salz ausgewählt unter den in Calciumchloridhexahydrat löslichen Alkali-, Erdalkali-, Ammonium- und Cholin-halogenide, sowie -Alkali-, Erdalkali-, Ammonium- und Cholinacetaten. Beispielhaft seien Natriumchlorid, Kaliumchlorid, Ammoniumchlorid, Cholinchlorid, Magnesiumchlorid, Calciumchlorid, Strontiumchlorid, Bariumchlorid, Natriumbromid, Kaliumbromid, Ammoniumbromid, Cholinbromid, Magnesiumbromid, Calciumbromid, Strontiumbromid, Bariumbromid, Natriumacetat, Kaliumacetat, Ammoniumacetat, Cholinacetat, Magnesiumacetat und Calciumacetat genannt. Bevorzugt werden Natrium-, Kalium- und/oder Ammoniumchlorid.

Diese weiteren Salze werden erfindungsgemäß in einer Menge bis zu 20 Gew.-% eingesetzt, vorzugsweise von 2 bis 10 Gew.-% bezogen auf die wärmespeichernde Zusammensetzung. In der Regel bestimmt sich die Einsatzmenge durch die gewünschte Erniedrigung der Schmelztemperatur.

Sofern die Salze nicht im geschmolzenen Calciumchloridhexahydrat löslich sind, können sie auch als Keimbildner wirken.

Unter Keimbildner, auch als Nucleierungsmittel oder Nucleationsmittel bezeichnet, sind Substanzen zu verstehen, die in Gegenwart des geschmolzenen Calciumchloridhexhydrats Kristallisationskeime generieren oder als solche wirken (Römpp Chemie Lexikon, Thieme Verlag), die die Bildung einer größeren Anzahl kleinerer Kristalle begünstigen und den Kristallisationsprozess beschleunigen. Auf diese Weise lässt sich eine Unterkühlung der Schmelze verringern.

Als Keimbilder können unterschiedlichste weitere Salze wirken, z. B. Borax (Dinatriumtetraborat-Decahydrat), Titandioxid, Al₂O₃ (Aluminiumoxid), ZnO (Zinkoxid), Zn(OH)₂ (Zinkhydroxid), Bariumsulfat (BaSO₄), Strontiumsulfat (SrSO₄), Erdalkalimetallhalogeniden und Silicumdioxid. Weiterhin können als Keimbildner Kupfer-Pulver oder Graphit zugesetzt werden. Bevorzugt wird der Keimbildner ausgewählt unter den Erdalkalimetallhalogeniden. Besonders bevorzugt sind Bariumchlorid und Strontiumchlorid.

Der Keimbildner wird bevorzugt in einer Menge von 0,1 bis 10 Gew.-%, vorzugsweise von 1 bis 5 Gew.-% bezogen auf die Gesamtzusammensetzung eingesetzt.

Weiterhin ist es möglich, bis zu 30 Gew.-% bezogen auf die wärmespeichernde Zusammensetzung Wasser zuzusetzen. Der Zusatz solch kleiner Wassermengen hat keinen negativen Einfluss auf die Stabilität des Calciumchloridhexahydrats. Der Zusatz führt lediglich zu einer geringfügigen Verringerung der Wärmekapazität der Zusammensetzung.

Bevorzugt enthält die wärmespeichernde Zusammensetzung
- 85 bis 96 Gew.-%: Calciumchloridhexahydrat
- 2 bis 8 Gew.-%: eines oder mehrerer kationischer Polyelektrolyte und
- 2 bis 10 Gew.-%: eines oder mehrerer weiterer Salze
jeweils bezogen auf die wärmespeichernde Zusammensetzung.

Die wärmespeichernden Zusammensetzungen sollen vorzugsweise homogen sein. Daher ist es am einfachsten, bei der Herstellung der wärmespeichernden Zusammensetzung über die Schmelze zu gehen. Die Herstellung der erfindungsgemäßen wärmespeichernden Zusammensetzung erfolgt beispielsweise, indem man eine Mischung enthaltend Calciumchloridhexahydrat und kationischen Polyelektrolyt sowie gegebenenfalls ein oder mehrere weitere Salze in der erfindungsgemäßen Zusammensetzung herstellt und anschließend schmilzt. Bevorzugt besteht die Mischung ausschließlich aus Calciumchloridhexahydrat, kationischem Polyelektrolyten und einem oder mehreren weiteren Salzen in der erfindungsgemäßen Zusammensetzung.

Die Herstellung der erfindungsgemäßen wärmespeichernden Zusammensetzung erfolgt bevorzugt, indem man die Zusammensetzungsbestandteile umfassend
70 bis 99 Gew.-% Calciumchloridhexahydrat
1 bis 10 Gew.-% eines oder mehrerer kationischer Polyelektrolyte,
sowie bis zu 20 Gew.-% eines oder mehrerer weiterer Salze, bevorzugt 0 bis 10 Gew.-%, zusammengibt, bevorzugt als Feststoff, und auf >25°C erwärmt. Gemäß dieser Ausführungsform ist wesentlich, dass der kationische Polyelektrolyt als eine Komponente der Mischung eingesetzt wird. Bevorzugt besteht die Mischung ausschließlich aus Calciumchloridhexahydrat, kationischem Polyelektrolyt und gegebenfalls weiteren Salzen in der erfindungsgemäßen Zusammensetzung.

Bei der Herstellung der wärmespeichernden Zusammensetzung ist eine homogene Mischung aller Zusammensetzungsbestandteile vorteilhaft. Da die Zusammensetzungsbestandteile bei Raumtemperatur alle als Feststoff vorliegen, ist die Zugabereihenfolge beliebig. Eine homogene Verteilung der Mischungsbestandteile kann mit einem Rührer oder Kneter erzielt werden. Vorteilhaft ist, dass kationischer Polyelektrolyt und Salzhydrat bereits als Mischung erwärmt werden.

Bevorzugt wird die Zusammensetzung auf eine Temperatur von 25 bis 65 °C erwärmt. Bereits ab einer Temperatur von 25 °C ist ein Erweichen zu beobachten. Es ist jedoch vorteilhaft auf eine Temperatur, die mindestens 20 °C über dem Schmelzpunkt von Calciumchloridhexahydrat oder der temperaturerniedrigten Mischung liegt, zu erwärmen. Eine Temperatur oberhalb von 60 °C ist in der Regel nicht vorteilhaft, da sich Wasserdampf bildet. Bevorzugt wird auf eine Temperatur im Bereich von 30 bis 50 °C erwärmt. Es ist erfindungsgemäß vorteilhaft, während des Schmelzens zu rühren. Dies kann beispielsweise in einem Kneter geschehen. Anschließend lässt man die Mischung auf Raumtemperatur abkühlen.

Gemäß einer bevorzugten Variante umgibt man die erfindungsgemäße Zusammensetzung mit einer wasserdampfdichten Hülle. Das Material für eine solche Hülle kann sowohl flexibel wie auch starr sein. Eine starre Ausführungsform entspricht einem wasserdampfdichten Behälter oder Container. Unter wasserdampfdicht ist dabei zu verstehen, dass über einen Zeitraum von 30 Tagen bei einer Temperatur von 25 °C der Wassergehalt durch Verdampfen um weniger als 5 %, bevorzugt um weniger als 1 % absinkt. Geeignete Hüllmaterialien sind beispielsweise Polyethylen, Metalle wie Aluminium oder Laminate aus Polyethylen und Metallen. Das Hüllmaterial wird bevorzugt in Form einer Folie eingesetzt. Bevorzugt wählt man eine flexible Umhüllung vorzugsweise eine mehrzellige Laminatfolie wie sie in US 5 626 936 beschrieben wird, um bei Beschädigung der Folie ein Funktionieren des Materials in den verbleibenden, unbeschädigten Zellen weiter zu gewährleisten.

Die erfindungsgemäßen wärmespeichernden Zusammensetzungen lassen sich vorteilhaft als Latentwärmespeicher einsetzen. Derartig umhüllte erfindungsgemäße Zusammensetzungen können als wärmespeicherndes Baumaterial im Wohnungsbau, Industriebau, Kühlhausbau, in Sektionaltoren, in Bürocontainern oder im Automobil-, Wohnwagen- und Schiffsbau sowie in Leichtbauwänden eingesetzt werden. Damit kann sowohl ein übermäßiges Aufheizen, wie auch bei sinkenden Außentemperaturen ein Auskühlen verhindert werden.

Hierzu kann beispielsweise eine oben beschriebene Laminatfolie in Hohlräumen, wie man sie in Deckenverkleidungen, im Trockenbau, unter der Dachisolation oder hinter Wandpanelen findet, angebracht werden. Denkbar ist ferner eine Einarbeitung in Möbelstücke, z.B. das Anbringen an die Rückwände von Schränken oder unter Tischplatten.

Ferner können sie in den Wänden von Transportbehältern zum Kühlen oder sonstigen Wärmespeicherbehältern eingesetzt werden. Weiterhin eignet sich die wärmespeichernde Zusammensetzung für Wärmetanks. Hierunter ist ein großer Behälter zu verstehen, der mit der wärmespeichernden Zusammensetzung gefüllt ist und der einen Wärmetauscher besitzt, so dass man z.B. eine Wärmeträgerflüssigkeit, typischerweise Wasser, in ein zentrales Heizsystem umpumpen kann, um die Wärme aus dem Tank in die zu temperierenden Räume zu befördern oder umgekehrt überschüssige Wärme von den Räumen in den zentralen Wärmetank. Möglich ist ebenso eine mobile Anwendung, indem der Tank auf einem Lastkraftwagen montiert ist, so dass beispielsweise überschüssige Wärme von Kraftwerken zu beliebigen Einsatzorten transportiert werden kann und dort an ein oben beschriebenes Umpumpsystem abgegeben werden kann.

Die nachfolgenden Beispiele sollen die Erfindung näher erläutern. Bei den Prozentangaben in den Beispielen handelt es sich um Gewichtsprozent sofern nicht anders angegeben.

### DSC-Messung:

Eine Probe wurde mittels differentieller Kalorimetrie-Analyse bezüglich des Schmelzpunktes und der Schmelzenthalpie untersucht (Gerät: DSC Q2000 von TA Instruments). Hierzu wurde eine Probe von 5 mg in ein abgeschlossenes Probenpfännchen gefüllt und mit 1 K/min auf 50 °C aufgeheizt, anschließend auf -30 °C abgekühlt und wieder auf 50 °C aufgeheizt. Die Schmelzenthalpie wurde beim zweiten Heizlauf aus der Fläche unter der Wärmestrom-Temperatur-Kurve entnommen.

### Polyelektrolyt 4 (P4) (linear)

In einem 2 1-Dreihalskolben mit Rührer und Thermometer wurden 296 g Wasser vorgelegt. Anschließend wurden 329 g einer 60 gew.-%igen wässrigen Lösung 3-(Acryloylamino)-propyl]-trimethylammoniumchlorid (DIMAPA-Quat) (0,95 mol, 27 Mol-%) und 355 g einer 50 gew.-%ige wässrigen Lösung von Acrylamid (2,6 mol, 73 Mol-%) zugesetzt. Als Molekulargewichtsregler wurden 50 ppm Ameisensäure zugegeben. Die Lösung wurde mit 20 %iger Natronlauge auf pH = 7 eingestellt, durch 30 minütiges Spülen mit Stickstoff inertisiert und auf ca. 5 °C abgekühlt. Die Lösung wurde in einen Plastikbehälter mit den Maßen (b*t*h) 15 cm *10cm *20 cm umgefüllt und anschließend wurden nacheinander 150 mg 2,2'-Azo-bis-(2-amidinopropan)-dihydrochlorid, 1,0 g 1 %ige Rongalit C-Lösung und 10 g 0,1 %ige tert.-Butylhydroperoxid-Lösung zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert wurden, wurden sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1 : 20 mit Wasser verdünnt wurde.

Das erhaltene Gelgranulat von Polyelektrolyt 1 wurde gleichmäßig auf Trockengitter verteilt und in einem Umlufttrockenschrank bei ca. 90 - 120 °C im Vakuum bis zur Gewichtskonstanz getrocknet.

Es wurden ca. 375 g eines weißen, harten Granulats erhalten, welches mit Hilfe einer Zentrifugalmühle in einen pulverigen Zustand überführt wurde.

### Polyelektrolyt 5 (P5) (linear mit hydrophober Seitenkette)

In einem 2 1-Dreihalskolben mit Rührer und Thermometer wurden 296 g Wasser vorgelegt. Anschließend wurden nacheinander 319 g einer 60 gew.-%igen wässrigen Lösung von 3-(Acryloylamino)-propyl]-trimethylammoniumchlorid (DIMAPA-Quat)' (0,92 mol, 26,8 Mol-%), 355 g einer 50 gew.-%igen wässrigen Lösung von Acrylamid (2,5 mol, 73 Mol-%) und 19 g Sipomer SEM 25 (Firma Rhodia, 60 gew.-%ige wässrige Lösung von Tristyrylphenol-polyethylenglykol-1100-methacrylat)(0,0068 mol, 0,2 Mol-%) zugesetzt. Als Molekulargewichtsregler wurden 50 ppm Ameisensäure zugegeben. Die Lösung wurde mit 20 %iger Natronlauge auf pH = 7 eingestellt und es wurde, wie für Polyelektrolyt 1 beschrieben, weiter verfahren.

Es wurden ca. 375 g eines weißen, harten Granulats erhalten, welches mit Hilfe einer Zentrifugalmühle in einen pulverigen Zustand überführt wurde.

### Polyelektrolyt 6 (P6) (vernetztes Copolymer)

In einem 2 1-Dreihalskolben mit Rührer und Thermometer wurden 345,6 g Wasser vorgelegt. Anschließend wurden nacheinander 308,60 g einer 60 gew.-%igen wässrigen Lösung von 3-(Acryloylamino)-propyl]-trimethylammoniumchlorid (DIMAPA-Quat) (0,90 mol, 27 Mol-%) , 328,25 g einer 50 gew.-%igen wässrigen Lösung von Acrylamid (2,30 mol, 73 Mol-%) und 0,4 g (0,0028 mol, 0,08 Mol-%) Methylenbisacrylamid (MbA) zugesetzt. Die Lösung wurde mit 20 %iger Natronlauge auf pH = 7 eingestellt und es wurde wie für Polyelektrolyt 1 beschrieben weiter verfahren.

Es wurden ca. 280 g eines weißen, harten Granulats erhalten, welches mit Hilfe einer Zentrifugalmühle in einen pulverigen Zustand überführt wurde.

Analog zur Herstellung des Polyelektrolyt nach den Beispielen P4 bis P6 wurden weitere Polyelektrolyte P1 bis P3 und P7 bis P10 hergestellt, die sich ihrer Monomerzusammensetzung unterschieden und die der nachfolgenden Tabelle 1 zu entnehmen sind.

**Tabelle 1: Polyelektrolyte**

| Beispiel | kat. Monomer [Mol-%] | Acrylamid [Mol-%] | Vernetzer [Mol-%] | hydrophobes Monomer [Mol-%] |
|---|---|---|---|---|
| P1 n.e. | - | 100 | - | - |
| P2 n.e. | - | 99,8 | - | 0,2 SEM 25 |
| P3 n.e. | - | 99,9 | 0,08 MbA | - |
| P4 | 27 % DIMAPA-Quat | 73 | - | - |
| P5 | 27 % DIMAPA-Quat | 73 | - | 0,2 SEM 25 |
| P6 | 27 % DIMAPA-Quat | 72,9 | 0,08 MbA | - |
| P 7 | 42 % Madame-Quat | 68 | | |
| P 8 | 42 % Madame-Quat | 67,8 | | 0,2 SEM 25 |
| P 9 | 42 % DIMAPA-Quat | 67,8 | | 0,2 SEM 25 |
| P 10 | 58 % DIMAPA-Quat | 42 | | |

| | | | | |
|---|---|---|---|---|
| Abkürzungen: DIMAPA-Quat = 3-(Acryloylamino)-propyl]-trimethylammoniumchlorid Madame-Quat = 2-(Methacryloyloxo)-ethyl]-trimethylammoniumchlorid SEM 25 = Tristyrylphenol-polyethylenglykol-1100-methacrylat MbA = Methylenbisacrylamid n.e.: nicht erfindungsgemäß | | | | |

### Beispiel 1: Herstellung der wärmespeichernden Zusammensetzung

### Zusammensetzung:

9,3 g Calciumchloridhexahydrat
0,4 g Polyelektrolyt P1
0,3 g Strontiumchloriddihydrat

Die obigen Inhaltsstoffe wurden als Pulver gemischt und in einem Kunststoffbecher mit Deckel für eine Stunde auf 65 °C erhitzt. Das erhaltene Material wurde bis zum Erstarren abgekühlt und klein gemahlen.

### Beispiele 2-10

Analog zu Beispiel 1 wurden mit den Polyelektrolyten P2 bis P10 weitere wärmespeichernden Zusammensetzungen hergestellt und mittels DSC deren Schmelzenthalpien bestimmt, die der Tabelle 2 zu entnehmen sind.

| Beispiel | Polyelektrolyt | ΔHₘ (J/g) |
|---|---|---|
| 1 n.e. | P1 | Phasentrennung |
| 2 n.e. | P2 | Phasentrennung |
| 3 n.e. | P3 | Phasentrennung |
| 4 | P4 | 155 |
| 5 | P5 | 145 |
| 6 | P6 | 150 |
| 7 | P7 | 145 |
| 8 | P8 | 155 |
| 9 | P9 | 150 |
| 10 | P10 | 155 |

| | | |
|---|---|---|
| n.e.: nicht erfindungsgemäß Phasentrennung = Phasentrennung bei der Herstellung der wärmespeichernden Zusammensetzung | | |

Die Zusammensetzung aus Beispiel 6 wird einem Langzeitzyklentest unterzogen: Ein 10 ml Ampullengläschen wird randvoll mit der Zusammensetzung aus Beispiel 6 gefüllt, das Gläschen wird anschließend luft- und wasserdicht verschlossen. Dann wird es in das Wasserbad eines kryostaten versenkt. Der Kryostat durchläuft 1000 Mal folgendes Temperaturprogramm:
Heizen auf 50 °C innerhalb von 10 Minuten
Halten der Temperatur bei 50 °C für 10 Minuten
Abkühlen auf 10 °C innerhalb von 10 Minuten
Halten der Temperatur bei 10 °C für 30 Minuten

Nach 1000 Zyklen wird eine Probe der Zusammensetzung einer DSC-Messung unterzogen. Es wurden ein Schmelzpunkt von 30 °C und eine Schmelzenthalpie von 153 J/g ermittelt.

Die U.S. Provisional Patent Application No. 61/554515, eingereicht am 02.11.2011, ist in die vorliegende Anmeldung durch Literaturhinweis eingefügt.

## Patentansprüche

1. Wärmespeichernde Zusammensetzung enthaltend
70 bis 99 Gew.-% Calciumchloridhexahydrat
1 bis 10 Gew.-% eines oder mehrerer kationischer Polyelektrolyte und
0 bis 20 Gew.-% eines oder mehrerer weiterer Salze
jeweils bezogen auf die wärmespeichernde Zusammensetzung.

2. Wärmespeichernde Zusammensetzung nach Anspruch 1, **dadurch gekennzeichnet, dass** der kationische Polyelektrolyt erhältlich ist durch Polymerisation einer Monomermischung enthaltend
a) 5 - 95 Mol-% mindestens eines kationischen ethylenisch ungesättigten Monomeren und
b) 5 - 95 Mol-% mindestens eines nichtionischen wasserlöslichen, gegebenenfalls N-substituierten (Meth)acrylamids,
jeweils bezogen auf die Gesamtmenge der Monomere.

3. Wärmespeichernde Zusammensetzung nach Anspruch 1 oder 2, **dadurch gekennzeichnet, dass** der kationische Polyelektrolyt erhältlich ist durch Polymerisation einer Monomermischung bestehend aus
a) 5 - 95 Mol-% mindestens eines kationischen ethylenisch ungesättigten Monomeren und
b) 5 - 95 Mol-% mindestens eines nichtionischen wasserlöslichen, gegebenenfalls N-substituierten (Meth)acrylamids,
c) 0 bis 1 Mol-% eines oder mehrerer ethylenisch ungesättigter Vernetzer
d) 0 bis 3 Mol% eines oder mehrerer hydrophob modifizierter Monomere
jeweils bezogen auf die Gesamtmenge der Monomere.

4. Wärmespeichernde Zusammensetzung nach einem der Ansprüche 1 bis 3,
**dadurch gekennzeichnet, dass** der kationische Polyelektrolyt vernetzt ist.

5. Wärmespeichernde Zusammensetzung nach einem der Ansprüche 1 bis 4,
**dadurch gekennzeichnet, dass** der Polyelektrolyt vernetzt oder unvernetzt ist und ein hydrophob modifiziertes Monomer in einpolymerisierter Form enthält.

6. Wärmespeichernde Zusammensetzung nach einem der Ansprüche 1 bis 5, enthaltend
85 bis 96 Gew.-% Calciumchloridhexahydrat
2 bis 8 Gew.-% eines oder mehrerer kationischer Polyelektrolyte und
2 bis 10 Gew.-% eines oder mehrerer weiterer Salze
jeweils bezogen auf die wärmespeichernde Zusammensetzung.

7. Wärmespeichernde Zusammensetzung nach einem der Ansprüche 1 bis 6,
**dadurch gekennzeichnet, dass** das weitere Salz ausgewählt wird unter Borax (Dinatriumtetraborat-Decahydrat), Titandioxid, Al₂O₃, ZnO, Zn(OH)₂, BaSO₄, SrSO₄, Erdalkalimetallhalogenide, Kupfer-Pulver, Graphit, und Silicumdioxid.

8. Wärmespeichernde Zusammensetzung nach einem der Ansprüche 1 bis 7,
**dadurch gekennzeichnet, dass** das weitere Salz ausgewählt wird unter Alkali-, Erdalkali-, Ammonium- und Cholinhalogeniden, sowie -Alkali-, Erdalkali-, Ammonium-, und Cholinacetaten.

9. Wärmespeichernde Zusammensetzung nach einem der Ansprüche 1 bis 8, erhältlich, indem man die Zusammensetzungsbestandteile umfassend
70 bis 99 Gew.-% Calciumchloridhexahydrat
1 bis 10 Gew.-% eines oder mehrerer kationischer Polyelektrolyte sowie
0 bis 20 Gew.-% eines oder mehrerer weiterer Salze
zusammengibt und auf >25°C erwärmt.

10. Wärmespeichernde Zusammensetzung nach einem der Ansprüche 1 bis 9, die von einer wasserdampfdichten Hülle umgeben ist.

11. Verfahren zur Herstellung einer wärmespeichernden Zusammensetzung gemäß den Ansprüche 1 bis 10, **dadurch gekennzeichnet, dass** man die Zusammensetzungsbestandteile umfassend 70 bis 99 Gew.-% Calciumchloridhexahydrat, 1 bis 10 Gew.-% eines oder mehrerer kationischer Polyelektrolyte sowie gegebenenfalls bis zu 20 Gew.-% eines oder mehrerer weiterer Salze zusammengibt und auf >25°C erwärmt.

12. Verwendung der wärmespeichernden Zusammensetzung gemäß den Ansprüchen 1 bis 10 als Latentwärmespeicher.

13. Verwendung der wärmespeichernden Zusammensetzung gemäß den Ansprüchen 1 bis 10 als Latentwärmespeicher in wärmespeichernden Baumaterialien.

14. Verwendung der wärmespeichernden Zusammensetzung gemäß den Ansprüchen 1 bis 10 als Wärmespeicherelement für Fahrzeuge, Wände von Transportbehältern oder sonstigen Wärmespeicherbehältern.
